# FASCICULE DE BREVET EUROPEEN

(11) **EP 2 028 929 B1**
(45) Date de publication et mention de la délivrance du brevet: **07.10.2009**
(21) Numéro de dépôt: 07803760.3
(22) Date de dépôt: 20.06.2007
(51) Int. Cl.: A01K 11/00

(54) **ETIQUETTE AURICULAIRE D'IDENTIFICATION POUR ANIMAL**
OHRMARKE ZUR IDENTIFIZIERUNG EINES TIERES
EAR TAG FOR IDENTIFYING AN ANIMAL

(30) Priorité: 20.06.2006 FR 0605489
(43) Date de publication de la demande: 04.03.2009
(73) Titulaire: A. Raymond et Cie., 38000 Grenoble (FR)
(72) Inventeur: BOUBTANE, Mohieddine, F-38170 Seyssinet-Pariset (FR); LEGAT, Jean-Jacques, F-38690 Colombe (FR); GONDRE, Marc, F-38270 Bellegarde Poussieu (FR); GIRARD, Didier, F-69004 Lyon (FR)
(74) Mandataire: Hecké, Gérard
(86) Numéro de dépôt international: PCT/FR2007/001022
(87) Numéro de publication internationale: WO 2007/147972

(56) Documents cités:
- WO-A-90/06570
- FR-A1- 2 380 725
- US-A- 6 095 915
- US-A1- 2003 121 188

## Description

### Domaine technique de l'invention

L'invention est relative à une étiquette auriculaire d'identification pour animal, comprenant un élément femelle percé d'une ouverture coopérant avec une extrémité libre d'un corps tubulaire d'un élément mâle comportant une coque de support d'informations relatives audit animal.

### État de la technique

De telles étiquettes sont mises en place par des pinces spéciales dont un mors comporte un support pour la fixation de l'élément femelle, tandis que l'autre mors est pourvu d'une tige destinée à être engagée axialement dans le corps tubulaire. Une étiquette est posée en amenant la pince préalablement garnie de manière que le pavillon de l'oreille de l'animal s'insère entre les mors de la pince, puis les branches de celles-ci sont rapprochées afin que l'extrémité libre du corps tubulaire traverse le cartilage et l'ouverture de l'élément femelle moyennant une déformation élastique de l'ouverture et que le corps tubulaire reste coincé par un épaulement de l'extrémité libre contre le bord de l'ouverture. L'écartement des mors provoque le dégagement d'au moins l'un des deux éléments. On connaît une telle étiquette du document WO-A-900 65 70.

La réglementation impose des dimensions croissantes aux coques, qui deviennent de plus en plus gênantes. La volonté des animaux augmente donc de se débarrasser de telles étiquettes en se frottant contre les arbres et les barrières. En outre, des coques de grandes dimensions s'engagent naturellement plus facilement dans ces éléments extérieurs, ce qui facilite d'autant leur accrochage et leur arrachage après rupture. Pour ne pas blesser l'animal, la rupture apparaît très facilement avec les étiquettes connues, dont les éléments mâle et femelle sont généralement réalisés par moulage d'une matière plastique rigide facilement cassante : lorsqu'un effort extérieur est appliqué sur la coque de l'élément mâle, l'étiquette se rompt à la jonction entre l'ouverture de l'élément femelle et le corps tubulaire de l'élément mâle. Dans ce cas, les éléments mâle et femelle tombent à terre et l'étiquette est perdue.

Or, la rigueur concernant la traçabilité sur la provenance des animaux impose qu'en cas de perte des deux étiquettes, l'animal ne peut pas être vendu, ce qui représente alors une perte conséquente pour l'éleveur.

### Objet de l'invention

L'objet de l'invention consiste à réaliser une étiquette auriculaire d'identification dont les risques de rupture par accrochage à des éléments extérieurs sont diminués.

Selon l'invention, ce but est atteint par une étiquette selon la revendication 1.

Des modes particuliers de réalisation de l'invention apparaissent dans les revendications dépendentes.

Selon un mode de réalisation préférentiel, au moins deux lignes de pliages sont perpendiculaires entre elles. Cette configuration augmente les possibilités de déformation du disque.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 est une vue en perspective d'un mode de réalisation d'une étiquette auriculaire d'identification pour animal selon l'invention, sur laquelle les éléments mâle et femelle sont séparés et l'élément mâle est dépourvu de sa coque,
- la figure 2 est une vue de face en coupe longitudinale de l'étiquette de la figure 1, sur laquelle les éléments mâle et femelle sont assemblés, et l'élément mâle est pourvu de sa coque,
- la figure 3 représente la face arrière du disque de l'élément mâle.

### Description d'un mode préférentiel de l'invention

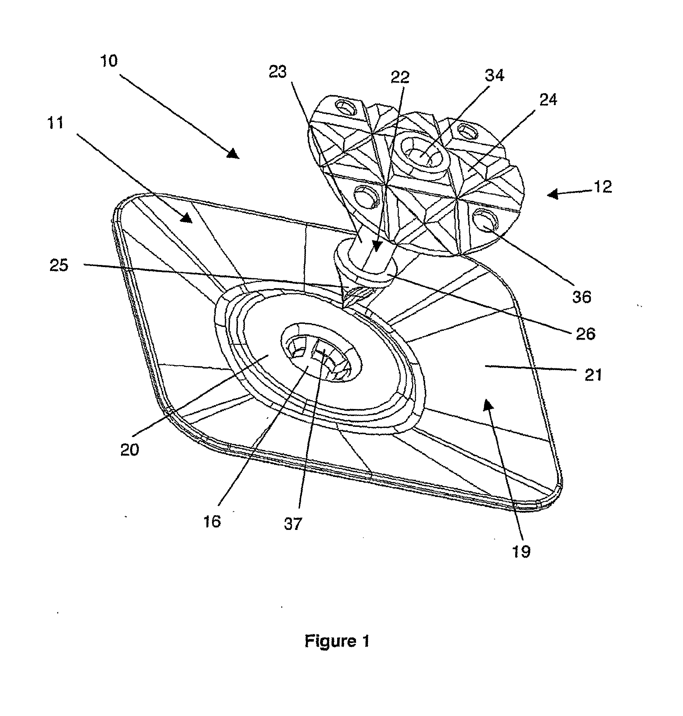

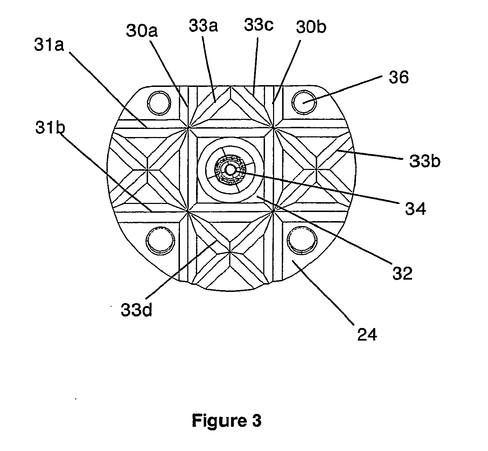

Les figures 1 à 3 illustrent un mode particulier de réalisation d'une étiquette auriculaire 10 d'identification pour animal selon l'invention. L'étiquette 10 comprend un élément femelle 11 et un élément mâle 12 qui peuvent être assemblés à l'aide d'une pince spéciale. Un cavalier 13, dont la fonction sera décrite plus loin, peut optionnellement venir chevaucher l'élément mâle 12.

L'élément femelle 11 se compose d'abord d'un réceptacle 14 borgne en forme de révolution sensiblement ogivale, réalisé dans une matière rigide. A une extrémité, le réceptacle 14 présente une ouverture circulaire 15 assurant la communication entre l'intérieur et l'extérieur du réceptacle 14. A cette même extrémité, le réceptacle 14 comporte une collerette annulaire 16 qui s'étend radialement depuis la surface extérieure 17. Des perforations axiales 18 traversent la collerette annulaire 16 dans son épaisseur suivant la direction de l'axe de révolution du réceptacle 14. Un élément électronique de type transpondeur (étiquette radiofréquence RFID) peut être intégré dans la collerette annulaire 16 par tout moyen approprié, comme par exemple le surmoulage.

Des pattes flexibles 37, au nombre de quatre dans cet exemple de réalisation, sont prévues sur le contour de l'ouverture circulaire 15 pour faire saillie en direction du centre de l'ouverture 15. Les pattes flexibles 37 présentent une possibilité unidirectionnelle de flexion dans la direction axiale du réceptacle 14. Plus précisément, les pattes 37 peuvent fléchir vers la cavité délimitée par le réceptacle 14, mais ne peuvent pas fléchir dans le sens opposé, c'est-à-dire vers l'extérieur du réceptacle 14.

Une première coque 19 est surmoulée sur la collerette annulaire 16 du réceptacle 14 et comporte à cet effet, à une extrémité, un disque d'accouplement 20 qui enrobe la collerette annulaire 16. La matière du disque d'accouplement 20 vient s'insérer dans les perforations axiales 18 de la collerette 16 pendant le surmoulage de la première coque 19, ce qui renforce la rigidité de la fixation de la première coque 19. Le disque d'accouplement 20 se prolonge par une jupe évasée 21 dirigée du côté opposé au réceptacle 14. La jupe évasée 21 délimite un cercle rattaché au bord du disque d'accouplement 20 et un carré de plus grandes dimensions que le cercle. La première coque 19 est réalisée dans une matière souple et élastique et se destine à supporter des informations relatives à l'animal sur lequel l'étiquette 10 est fixée.

L'étiquette auriculaire 10 est complétée par un élément mâle 12 comportant un élément d'accrochage 22, réalisé dans une matière rigide, et susceptible de venir se fixer sur l'élément femelle 11. L'élément d'accrochage 22 se compose d'un corps tubulaire 23 de forme cylindrique. Le corps tubulaire 23 se prolonge à une extrémité par un disque 24 disposé perpendiculairement à l'axe du corps 23. L'extrémité libre du corps tubulaire 23, opposée au disque 24, comporte quant à elle une pointe conique 25 dont la base est un cercle de diamètre supérieur à celui du corps tubulaire 23. La jonction entre la base de la pointe 25 et la surface extérieure cylindrique du corps tubulaire 23 définit un épaulement 26. La pointe conique 25 peut présenter une arête avec un profil concave pour faciliter un perçage progressif du cartilage du pavillon de l'oreille lors de la fixation de l'étiquette auriculaire 10.

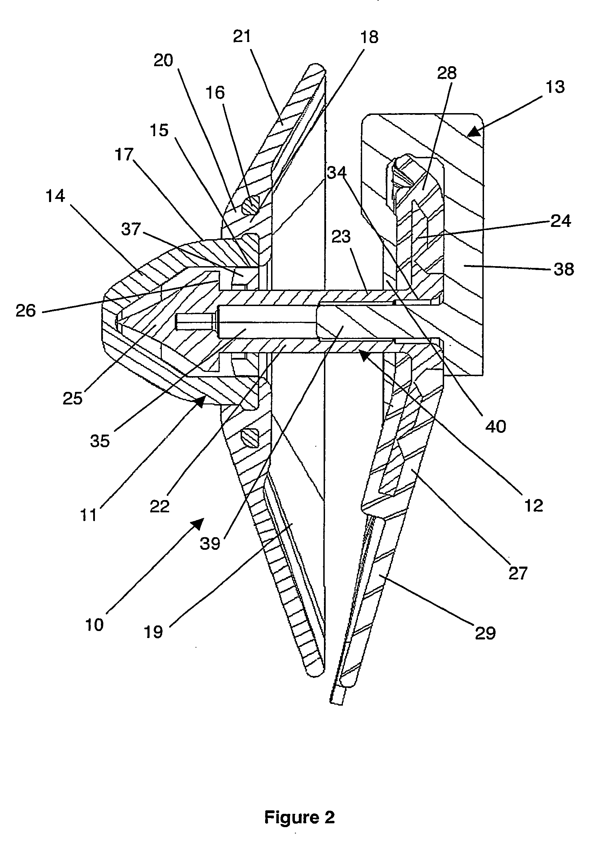

L'élément mâle 12 comporte en outre une deuxième coque 27 par exemple réalisée dans une matière souple et élastique et qui, à titre d'exemple, est surmoulée à une extrémité 28 sur le disque 24 de l'élément d'accrochage 22. Dans le mode de réalisation particulier illustré à la figure 2, l'extrémité surmoulée 28 de la deuxième coque 27 présente la forme d'un cadre rectangulaire qui enrobe le disque 24. Dans d'autres variantes, seule l'extrémité surmoulée 28 est réalisée dans une matière souple et élastique. L'extrémité surmoulée 28 se prolonge vers le bas par une plaque 29 légèrement orientée en direction de la pointe conique 25. L'arrière de la plaque 29 est destinée, elle aussi, à supporter des informations relatives à l'animal.

Le disque 24 est tronqué dans sa partie supérieure, c'est-à-dire à l'opposé de la plaque 29. D'autre part, sa face arrière opposée au corps tubulaire 23 présente une série de rainures rectilignes, par exemple à profil triangulaire, obtenues par une diminution locale de l'épaisseur du disque 24. Selon la disposition représentée, deux rainures verticales 30a, 30b et deux rainures horizontales 31 a, 31 b encadrent un carré central 32 du disque 24. Sur la face avant du disque 24, le carré central 32 est connecté au corps tubulaire 23. A chaque sommet du carré central 32 passe une rainure oblique 33a, 33b, 33c, 33d qui définit un angle de 45° à la fois par rapport à la rainure verticale 30a, 30b correspondante et par rapport à la rainure horizontale 31a, 31b correspondante. Le carré central 32 comporte un perçage 34 assurant la communication entre l'extérieur et le conduit 35 interne au corps tubulaire 23. Pour renforcer la rigidité de la fixation de l'extrémité surmoulée 28 de la deuxième coque 27 sur le disque 24, des perforations 36 traversent l'épaisseur du disque 24 à proximité de son bord périphérique pour relier ses faces avant et arrière.

La diminution locale de l'épaisseur du disque 24 est déterminée pour que l'épaisseur restante, en fond de rainure, autorise une déformation locale et élastique de la matière du disque 24. Selon cette disposition, chaque rainure 30a, 30b, 31 a, 31 b, 33a, 33b, 33c, 33d constitue une ligne de pliage.

Dans la configuration naturelle de la deuxième coque 27, laquelle configuration est imposée par la forme du moule lors du surmoulage, le cadre formé par l'extrémité surmoulée 28 n'est pas plan et possède une partie inférieure orientée dans la direction de la plaque 29. La rainure horizontale 31 b qui délimite le bord inférieur du carré central 32 présente à cet effet une déformation permanente telle que la partie du disque 24 située en dessous de la rainure 31 b soit orientée parallèlement à la plaque 29.

La fixation de l'étiquette auriculaire 10 se pratique de la manière suivante : l'élément femelle 11 est fixé à un mors d'une pince spéciale dont l'autre mors est pourvu d'une tige destinée à être engagée axialement dans le conduit 35 en passant au travers du perçage 34. La pince préalablement garnie est disposée de manière que le pavillon de l'oreille de l'animal s'insère entre les éléments femelle 11 et mâle 12, puis les branches de celles-ci sont rapprochées afin que la pointe conique 25 traverse d'abord le cartilage du pavillon de l'oreille de l'animal, puis l'ouverture circulaire 15 du réceptacle 14 moyennant une déformation élastique des pattes flexibles 37. Le corps tubulaire 23 reste ensuite coincé grâce à l'appui de l'épaulement 26 contre les pattes flexibles 37 après leur retour automatique dû à l'élasticité de la matière.

De manière naturelle, l'animal va par la suite frotter son oreille sur des éléments extérieurs comme des barrières, des branches, des talus ou des buissons, pour tenter d'arracher l'étiquette 10 fixée et qui généralement le gêne. La convergence des coques 19 et 27, conjuguée à l'élasticité et à la souplesse de leur matière constitutive, permet à l'étiquette 10 de se conformer à chaque instant à la forme l'oreille de l'animal. Ces caractéristiques permettent de diminuer les possibilités d'insertion de l'un de ces éléments extérieurs entre la coque 19, 27 et l'oreille.

Par sa situation saillante à l'arrière de l'oreille, la deuxième coque 27 est exposée à de plus forts risques de sollicitations extérieures. La souplesse élastique de l'extrémité surmoulée 28 de la deuxième coque 27, conjuguée à la capacité de déformation élastique propre au disque 24 au niveau des lignes de pliage, autorisent un large débattement de la plaque 29 depuis sa configuration naturelle lorsqu'un effort extérieur lui est appliqué. Ce débattement autorisé de la plaque 29 permet notamment de se libérer d'éléments extérieurs après un accrochage fortuit, tout en évitant la rupture de l'étiquette 10 au niveau du corps tubulaire 23.

D'autre part, le disque d'accouplement 20 de la première coque 19 et l'extrémité surmoulée 28 de la deuxième coque 27 constituent des zones fusibles de rupture aptes à se casser au delà d'une contrainte interne prédéterminée. Lorsqu'un effort extérieur trop élevé est appliqué à une coque 19, 27, celle-ci se désolidarise du disque 20, 24 correspondant au niveau de la zone fusible de rupture. Cette disposition permet de diminuer les risques de rupture de l'étiquette 10 au niveau du corps tubulaire 23. La collerette annulaire 16 et le disque 24 étant de dimensions supérieures au diamètre du trou réalisé dans le pavillon de l'oreille de l'animal, l'étiquette 10 reste en place malgré la perte d'une coque 19, 27 provoquée par la casse au niveau de la zone fusible de rupture associée. La coque 19, 27 restante permet de conserver la traçabilité de l'animal.

Dans certaines variantes, un élément électronique de type transpondeur est inséré dans le conduit 35 avant le surmoulage de la deuxième coque 27. Dans d'autres variantes (figure 2), un cavalier 13 réalisé dans une matière active antiseptique, insecticide ou de traitement de maladie animale chevauche l'élément mâle 11. Plus précisément, le cavalier 13 comporte une plaque arrière 38 à partir de laquelle s'étend perpendiculairement, dans sa partie inférieure, un centreur 39 apte à s'insérer dans le conduit 35. A son bord supérieur, la plaque arrière 38 est reliée à une plaque avant 40 parallèle. La plaque avant 40 présente une rainure centrale verticale traversée par le centreur 39. La jonction entre la plaque avant 40 et la plaque arrière 38 est déformable élastiquement. En tirant sur la plaque arrière 38, celle-ci peut donc s'incliner par rapport à la plaque avant 40 afin de pouvoir écarter le centreur 39, lors de la mise en place du cavalier 13, d'une manière suffisante pour permettre à l'extrémité surmoulée 28 de s'insérer entre les plaques 38 et 40. Par retour élastique du cavalier 13 vers sa configuration naturelle lorsque l'effort sur la plaque arrière 38 cesse, d'une part le centreur 39 vient s'insérer dans le conduit 35 au travers du perçage 34, et d'autre part l'extrémité surmoulée 28 de la coque 27 de l'élément mâle 12 se trouve pressée entre les plaques 38 et 40.

L'invention n'est pas limitée au mode de réalisation particulier décrit ci-dessus. En particulier, la coque 27 n'est pas obligatoirement surmoulée sur le disque 24 mais peut consister en un prolongement périphérique de ce dernier, par exemple dans sa partie inférieure. La coque 27 peut également être surmoulée sur un organe d'ancrage (non représenté) agencé dans le prolongement du corps tubulaire 22 de telle manière que le disque 24 soit intercalé entre l'extrémité libre 25 du corps tubulaire 22 et ledit organe d'ancrage. Dans cette dernière variante, le disque 24 est notamment destiné à former sensiblement une limite pour l'extrémité surmoulée (sur l'organe d'ancrage) de la coque 27, de manière à ce que la coque 27 recouvre complètement l'organe d'ancrage et de manière à ce qu'une face du disque 24, en regard de la pointe conique 25, reste visible et ferme ainsi l'extrémité surmoulée de la coque 27.

Dans tous les cas, la capacité de déformation élastique propre au disque, grâce aux lignes de pliage, autorise un large débattement de la coque 27 depuis sa configuration naturelle lorsqu'un effort extérieur lui est appliqué. Ce débattement permet notamment de se libérer d'éléments extérieurs après un accrochage fortuit, sans provoquer de rupture de l'étiquette.

## Revendications

1. Etiquette auriculaire (10) d'identification pour animal, comprenant un élément femelle (11) percé d'une ouverture (15) coopérant avec une extrémité libre (25) d'un corps tubulaire (23) d'un élément mâle (12) comportant une coque (27) de support d'informations relatives audit animal, **caractérisée en ce que** l'élément mâle (12) comporte un disque (24) sensiblement perpendiculaire au corps tubulaire (23) et comprenant une pluralité de lignes de pliage.

2. Etiquette selon la revendication 1, **caractérisée en ce qu'**au moins deux lignes de pliages sont perpendiculaires entre elles.

3. Etiquette selon l'une quelconque des revendications 1 et 2, **caractérisée en ce que** chaque ligne de pliage comporte une rainure (30a, 30b, 31 a, 31 b, 33a, 33b, 33c, 33d) obtenue par une diminution locale de l'épaisseur du disque (24).

## Claims

1. An aurical identification tag (10) for an animal comprising a female element (11) wherein there is drilled an opening (15) operating in combination with a free end (25) of a tubular body (23) of a male element (12) comprising a shell (27) bearing data relative to said animal, **characterized in that** the male element (12) comprises a disk (24) substantially perpendicular to the tubular body (23) and comprising a plurality of folding lines.

2. The tag according to claim 1, **characterized in that** at least two folding lines are perpendicular to one another.

3. The tag according to either one of claims 1 and 2, **characterized in that** each folding line comprises a groove (30a, 30b, 31 a, 31 b, 33a, 33b, 33c, 33d) obtained by local reduction of the thickness of the disk (24).

## Patentansprüche

1. Identifikations-Ohrmarke (10) für Tiere, die ein weibliches Element (11) umfasst, das mit einer Öffnung (15) versehen ist, die mit einem freien Ende (25) eines röhrenförmigen Körpers (23) eines männlichen Elements (12) zusammenwirkt, das eine Schale (27) umfasst, die auf das Tier bezogene Daten enthält, **dadurch gekennzeichnet, dass** das männliche Element (12) eine zum röhrenförmigen Körper (23) im Wesentlichen lotrechte Scheibe (24) umfasst, die eine Mehrzahl von Falzlinien aufweist.

2. Ohrmarke nach Anspruch 1, **dadurch gekennzeichnet, dass** mindestens zwei Falzlinien quer zueinander verlaufen.

3. Ohrmarke nach einem der Ansprüche 1 und 2, **dadurch gekennzeichnet, dass** jede Falzlinie eine Rille (30a, 30b, 31a, 31b, 33a, 33b, 33c, 33d) umfasst, die durch lokale Dickenverringerung der Scheibe (24) erhalten wird.
